Europäisches Patentamt

European Patent Office

Office européen des brevets

(19)

(11) Veröffentlichungsnummer: **0 031 428 B1**

(12) **EUROPÄISCHE PATENTSCHRIFT**

(45) Veröffentlichungstag der Patentschrift:
06.10.82

(51) Int. Cl.³: **C 01 B 25/26,** C 01 B 25/45, C 09 D 5/08

(21) Anmeldenummer: 80106945.1

(22) Anmeldetag: 11.11.80

(54) **Verfahren zur Herstellung feindisperser, schwerlöslicher Salze von Sauerstoffsäuren des Phosphors.**

(30) Priorität: 19.12.79 DE 2951126

(43) Veröffentlichungstag der Anmeldung:
08.07.81 Patentblatt 81/27

(45) Bekanntmachung des Hinweises auf die Patenterteilung:
06.10.82 Patentblatt 82/40

(84) Benannte Vertragsstaaten:
**BE DE FR GB IT NL SE**

(56) Entgegenhaltungen:
**EP-A-0 009 175**
**EP-A-0 011 223**
**EP-A-0 017 784**
**DE-A-2 655 458**
**DE-A-2 656 779**
**DE-C-1 567 609**

(73) Patentinhaber: **HOECHST AKTIENGESELLSCHAFT,
Postfach 80 03 20, D-6230 Frankfurt/Main 80 (DE)**

(72) Erfinder: **Maurer, Alexander, Dr., Am grünen Weg 7,
D-5030 Hürth (DE)**
Erfinder: **Adrian, Renate, Ing.grad., Gr.
Ölbruchstrasse 29, D-5030 Hürth (DE)**
Erfinder: **Heymer, Gero, Dr., Fasanenaue 12,
D-5042 Erftstadt-Liblar (DE)**

## Verfahren zur Herstellung feindisperser, schwerlöslicher Salze von Sauerstoffsäuren des Phosphors

Die Erfindung betrifft ein Verfahren zur Herstellung eines feindispersen, schwerlöslichen Salzes einer Sauerstoffsäure des Phosphors mit einer Korngröße von höchstens 20 μm durch Umsetzung einer Verbindung eines zweiwertigen Metalls mit der Sauerstoffsäure des Phosphors oder einem ihrer Alkali- oder Ammoniumsalze, welches dadurch gekennzeichnet ist, daß man zur Erzielung einer Korngrößenverteilung des feindispersen Salzes von mindestens 90% zwischen 0,05 und 7 μm eine mindestens 5gew.-%ige wäßrige Lösung oder Suspension einer Verbindung eines zweiwertigen Metalls aus der Gruppe Mg, Ca, Sr, Ba, Mn, Zn, Cu, Cd, Pb, Sn, Co, Ni unter Einhaltung eines pH-Bereichs zwischen 3 und 9 mit einer mindestens 2mol-%igen Lösung mindestens eines dreiwertigen Metalls aus der Gruppe Al, Fe, Cr in der Sauerstoffsäure des Phosphors und ggf. mit einer wäßrigen Lösung eines Alkali- oder Ammoniumsalzes der Sauerstoffsäure des Phosphors unter Rühren zur Reaktion bringt und das ausgefallene Salz in bekannter Weise abtrennt und trocknet.

Das Verfahren der Erfindung kann weiterhin wahlweise oder bevorzugt dadurch gekennzeichnet sein, daß man

a) als Verbindung eines zweiwertigen Metalls ein Carbonat, Oxid, Acetat oder Hydroxid einsetzt,

b) die wäßrige Lösung oder Suspension der Verbindung des zweiwertigen Metalls vorlegt und die Lösung des dreiwertigen Metalls in der Sauerstoffsäure des Phosphors unter Rühren zudosiert,

c) im Falle der Verwendung einer Verbindung eines zweiwertigen Metalls mit einem sauer reagierenden Anion den pH-Bereich zwischen 3 und 9 einhält, indem man gleichzeitig eine alkalische Verbindung zufügt, die mit dem sauer reagierenden Anion ein wasserlösliches Salz bildet,

d) als alkalische Verbindung eine wäßrige Lösung eines Alkali- oder Ammoniumsalzes der Sauerstoffsäure des Phosphors vorlegt und eine Mischung einer wäßrigen Lösung der Verbindung des zweiwertigen Metalls und der Lösung des dreiwertigen Metalls in der freien Sauerstoffsäure des Phosphors zudosiert, wobei die einzusetzende, stöchiometrisch erforderliche Menge an freier Sauerstoffsäure des Phosphors um einen Betrag vermindert wird, welcher der Menge ihres vorgelegten Alkali- oder Ammoniumsalzes äquivalent ist,

e) eine 8—30gew.-%ige wäßrige Lösung oder Suspension einer Verbindung des zweiwertigen Metalls einsetzt,

f) die Verbindung des zweiwertigen und des dreiwertigen Metalls im Reaktionsgemisch im Molverhältnis von (9 : 1) bis (50 : 1) einsetzt,

g) zur Erzielung einer Korngrößenverteilung des feindispersen Salzes von mindestens 90% zwischen 0,05 und 2 μm die Reaktionskomponenten in einem mit 3000 und 10 000 UpM rotierenden Dispergierorgan durch inniges Vermischen zur Reaktion bringt.

Die hergestellten feindispersen, schwerlöslichen Salze werden bevorzugt als Korrosionsschutzpigmente gebraucht. Doch können diese Pigmente auch in Lacke, Dispersionen und Kunststoffe eingearbeitet werden, wobei nicht unbedingt der Korrosionsschutz im Vordergrund stehen muß. Weiterhin ist ein Einsatz in Gläsern vorgesehen, da die feindispersen Pigmente schneller zu einer homogenen Verteilung führen. Schließlich ist die Verwendung einiger der erfindungsgemäß herstellbaren Salze im Nahrungs- und Futtermittelbereich, sowie in der kosmetischen und pharmazeutischen Industrie, z. B. in Zahnpasten, dann von Vorteil, wenn besonders feinteilige Produkte gefordert werden.

Phosphorhaltige Pigmente gewinnen vor allem für den Korrosionsschutz zunehmend an Bedeutung, weil sie neben einer guten Wirksamkeit meist auch in toxikologischer Hinsicht Vorteile gegenüber handelsüblichen Produkten besitzen. Eine gute Wirksamkeit erfordert eine ausreichende Feinheit der Pigmente, welche entweder durch aufwendiges Mahlen der Phosphate oder durch Umsetzung unter stark dispergierenden Bedingungen erreicht wird. Letzteres wird zum Beispiel in der älteren DE-Patentanmeldung P 2 840 820.0 beschrieben. Man gelangt so zwar zu Pigmentteilchen, deren Korngrößen unterhalb 20 μm liegen, aber die hochtourig drehenden Mahl- bzw. Dispergierorgane sind sehr energieaufwendig und verschleißanfällig, was eine Verbesserung der Herstellung in diesem Punkt wünschenswert erscheinen läßt.

In der DE-A-2 655 458 wird ein Verfahren zur Herstellung von Phosphatpigmenten beschrieben, welches durch Umsetzung einer wäßrigen Lösung, die Zink- und Phosphationen enthält, mit einem Eisenmaterial zur Bildung eines Niederschlages von Zink- und Eisenphosphat führt. Die festen Teilchen weisen zwar Pigmentfeinheit auf, doch ist das Produkt erst durch eine Nachbehandlung mit einem Erdalkalihydroxid als Pigment zu verwenden, da sein wasserlöslicher Anteil sonst zu hoch ist. Dies erfordert zusätzliche Apparate und Materialien. Auch wird im Gegensatz zur vorliegenden Erfindung nicht eine Verbindung zweiwertiger Metalle mit einer das dreiwertige Metall enthaltenden Phosphorsäure umgesetzt, sondern eine sehr verdünnte wäßrige Lösung von $Zn(H_2PO_4)_2$ wird mit einem Eisenmaterial zusammengebracht, was zur Bildung eines Gemisches von Zink- und Eisenphosphaten führt. Es wird demnach kein in seiner Dispersität verbessertes phosphorhaltiges Pigment eines zweiwertigen Metalls gewonnen, sondern bestenfalls ein Mischung verschiedener Eisen- und Zinkphosphate in Pigmentfeinheit.

Demgegenüber wurde nun gefunden, daß man bei der Fällung phosphorhaltiger Pigmente zweiwertiger Metalle zu deutlich feinerer Dispersität gelangt, wenn man der zur Reaktion eingesetzten Sauerstoffsäure des Phosphors, wie Phosphorsäure ($H_3PO_4$), phosphorige Säure ($H_3PO_3$) oder einer kondensierten Phosphorsäure, z. B. Pyrophosphorsäure ($H_4P_2O_7$), mindestens 2 Mol% Al und/oder Fe und/oder Cr, bezogen auf die stöchiometrisch notwendige Menge an Metallionen, zugibt. Als zweiwertige Metalle sind insbesondere Mg, Ca, Sr, Ba, Mn, Zn und Pb, ferner Cu, Cd, Sn, Co, Ni zu verstehen. Die Fällungsreaktion muß dabei im pH-Bereich zwischen 3 und 9 ablaufen, damit sich die Wirkung der zugesetzten dreiwertigen Metalle Al, Fe oder Cr voll entfalten kann. Auf diese Weise ist es möglich, z. B. Phosphate, Pyrophosphate oder Phosphite, die an sich sehr grob gefällt werden, in Pigmentfeinheit, also kleiner als 20 μm, auch ohne Einsatz hochtouriger Rühraggregate zu fällen. Setzt man dennoch hochtourige Dispergierorgane, die z. B. nach dem Rotor-Stator-Prinzip arbeiten, bei der Fällungsreaktion ein, so wird beim erfindungsgemäßen Arbeiten auch hier noch eine deutliche Verschiebung in den feindispersen Bereich beobachtet (vgl. Beispiele 6—9). Man erreicht somit Kornfeinheiten, die bisher bei diesen Phosphaten, Pyrophosphaten oder Phosphiten nicht zugänglich waren, wenn man davon absieht, daß unter technisch schwierigen und aufwendigen Bedingungen auch bisher der geringe Feinanteil solcher Produkte abgesiebt bzw. ausgesichtet werden konnte. Dies ist jedoch lediglich zu Untersuchungszwecken möglich; eine solche Arbeitsweise ist weder technisch noch wirtschaftlich praktikabel.

Die Metallionen des Aluminiums, Eisens oder Chroms werden dabei in einer Vorstufe bevorzugt in Form ihrer Oxide, Hydroxide oder Phosphate mit der Sauerstoffsäure des Phosphors in gewünschter Konzentration umgesetzt, um keine anionischen Verunreinigungen in das Reaktionsgemisch einzubringen. Prinzipiell sind jedoch auch andere Verbindungen oder, so weit möglich, die Metalle selbst zur Reaktion mit Phosphorsäure geeignet. Je nach Reaktivität der eingesetzten Verbindungen wird die Lösung bei Raum- oder erhöhter Temperatur zubereitet; wichtig ist nur, daß man eine klare Lösung erhält.

Die Lösung der Metalle Al und/oder Fe und/oder Cr in der entsprechenden Sauerstoffsäure des Phosphors wird in eine Lösung oder Suspension basischer Verbindungen der zweiwertigen Metalle (Oxide, Hydroxide, Carbonate, Acetate) unter Bedingungen, die zu einer möglichst homogenen Verteilung im Reaktionsansatz führen, dosiert. Der pH-Wert darf dabei innerhalb des angegebenen Bereiches schwanken. Bei Einsatz von sauer reagierenden Verbindungen zweiwertiger Metalle, wie beispielsweise den Chloriden, Sulfaten oder Nitraten, kann die Einhaltung des pH-Bereichs auch durch gleichzeitige Zugabe von alkalischen Verbindungen (z. B. NaOH, KOH), die mit den eingesetzten Anionen unter den Reaktionsbedingungen wasserlösliche Salze bilden, erfolgen. So ist es auch möglich, zur Einhaltung des pH-Bereichs von 3 bis 9 eine Teilmenge des Phosphats, Pyrophosphats oder Phosphits als Alkali- und/oder Ammoniumverbindung vorzulegen und die Restmenge in Form der Al- und/oder Fe- und/oder Cr-haltigen Sauerstoffsäure des Phosphors gleichzeitig mit der Lösung des zweiwertigen Metallsalzes zuzugeben (vgl. Beispiel 10). So kommt es zur vollen Entfaltung der erfindungsgemäßen Zusätze im Reaktionsansatz.

Die Suspension oder Lösung der Verbindungen der zweiwertigen Metalle sollte möglichst konzentriert zum Einsatz kommen. Dies ist nicht nur wegen der damit verbundenen Einsparungen bei den Apparaten wünschenswert, sondern die höhere Konzentration verstärkt die Wirkung der erfindungsgemäß mit der Sauerstoffsäure des Phosphors eingesetzten Metalle. Die Konzentration der Suspension oder Lösung sollte daher höher als 5 Gew.-% liegen; nach oben werden dabei lediglich durch die Rührfähigkeit der entstehenden Aufschlämmung Grenzen gesetzt. Bei Unterschreiten dieser Konzentration werden nur ungenügende Effekte beobachtet; bei sehr dünnen Lösungen oder Suspensionen bemerkt man keine Wirkung.

Die Aufarbeitung des Reaktionsgemisches erfolgt auf konventionelle Art und Weise. Die Produkte werden in der üblichen Form von der Lösung getrennt — beispielsweise durch Filtrieren, Dekantieren oder Zentrifugieren — gewaschen und je nach Temperaturempfindlichkeit mit üblichen Aggregaten getrocknet. Möglich ist z. B. auch eine Trocknung durch Versprühen des Reaktionsgemisches, was eine vorherige Trennung des Produkts vom Reaktionsgemisch einspart.

### Beispiel 1

Zu einer gut gerührten Suspension von 1902 g (19 Mol) $CaCO_3$ in 20 l Wasser wird im Verlauf von 2 Stunden eine Lösung von 27,0 g (1 Mol) Al in 2305 g (20 Mol) $H_3PO_4$ (85gew.-%ig) dosiert. Diese Lösung wurde vorher durch Auflösen einer entsprechenden Menge $Al(OH)_3$ in siedender $H_3PO_4$ hergestellt. Die Temperatur während der Reaktion des Calciumcarbonats mit der Lösung von Al in $H_3PO_4$ beträgt 25°C, der pH-Wert liegt zwischen 9 und 4,5. Es bildet sich ein Niederschlag, der abfiltriert, mit Wasser und Aceton gewaschen und 1 Std. bei 70°C im Trockenschrank getrocknet wird. Man erhält ein weißes Pigment, das röntgenographisch aus Calciumhydrogenphosphatdihydrat (Joint Committee on Powder Diffraction Standards, 1978 (JCPDS) Kartei-Nr.: 9—77 und 11—293) besteht. Seine mittlere Korngröße liegt bei 4 μm, die maximale Korngröße bei 10 μm. Die BET-Oberfläche beträgt 2,7 m²/g.

## Beispiel 2

Man verfährt wie in Beispiel 1. Es wird jetzt aber eine Lösung von nur 10,8 g (0,4 Mol) Al in 2305 g (20 Mol) $H_3PO_4$ (85gew.-%ig) zu einer Suspension von 1962 g (19,6 Mol) $CaCO_3$ in 20 l Wasser dosiert. Wieder erhält man ein weißes Pigment, dessen mittlere Korngröße bei 4 μm und dessen maximale Korngröße bei 10 μm liegt. Die BET-Oberfläche beträgt 2,5 m²/g.

## Beispiel 3

Man verfährt wie in Beispiel 1. Es wird jetzt aber eine Lösung von 55,85 g (1 Mol) Fe in 2305 g (20 Mol) $H_3PO_4$ (85gew.-%ig) zudosiert. Man erhält ein gelbliches Pigment, das röntgenographisch ebenfalls als Calciumhydrogenphosphatdihydrat identifiziert werden kann, dessen mittlere Korngröße bei 4 μm und dessen maximale Korngröße bei 10 μm liegen. Die BET-Oberfläche beträgt 2,4 m²/g.

## Beispiel 4

Man verfährt wie in Beispiel 1. Es wird jetzt aber eine Lösung von 52,0 g (1 Mol) Cr in 2305 g (20 Mol) $H_3PO_4$ (85gew.-%ig) zudosiert. Das Reaktionsprodukt ist ein grünliches Pigment, das röntgenographisch als Calciumhydrogenphosphatdihydrat identifiziert werden kann, dessen mittlere Korngröße bei 5 μm und dessen maximale Korngröße bei 12 μm liegen. Die BET-Oberfläche beträgt 2,4 m²/g.

## Beispiel 5
### (Vergleichsbeispiel)

Man verfährt wie in Beispiel 1. Es werden jetzt aber 2305 g (20 Mol) 85gew.-%ige $H_3PO_4$ zu einer Suspension von 2002 g (20 Mol) $CaCO_3$ in 20 l Wasser gegeben. Man erhält Calciumhydrogenphosphatdihydrat einer mittleren Korngröße von 30 μm, wobei das Maximum bei 70 μm liegt. Die BET-Oberfläche beträgt 0,3 m²/g.

## Beispiel 6

In einem 30-l-Gefäß mit Rührer werden unter gutem Rühren 1902 g (19 Mol) $CaCO_3$ in 20 l Wasser zu einer homogenen Suspension aufgeschlämmt. Über eine Pumpe wird diese Suspension in eine trichterförmige Reaktionszone mit einem axial angeordneten Hochleistungsdispergiergerät, das nach dem Rotor-Stator-Prinzip arbeitet und mit 10 000 UpM dreht, dosiert. Im Verlauf von 2 h wird eine Lösung von 27,0 g (1 Mol) Al in 2305 g (20 Mol) $H_3PO_4$ (85gew.-%ig) über eine Düse in die Reaktionszone dosiert. Die Temperatur beträgt 20°C. Das Reaktionsgemisch wird anschließend noch 30 Min. umgepumpt, dann über eine Nutsche filtriert. Der Niederschlag wird mit Wasser und Aceton gewaschen und im Trockenschrank bei 70°C 1 Stunde getrocknet. Man erhält ein weißes Pigment, das röntgenographisch aus Calciumhydrogenphosphatdihydrat besteht. Seine mittlere Korngröße liegt unterhalb 1 μm, seine maximale Korngröße beträgt 4 μm. Die BET-Oberfläche des Produkts beträgt 16 m²/g.

## Beispiel 7
### (Vergleichsbeispiel)

Man verfährt wie in Beispiel 6. Es werden jetzt aber 2305 g (20 Mol) 85gew.-%ige $H_3PO_4$ zu 2002 g (20 Mol) $CaCO_3$ in 20 l Wasser dosiert. Man erhält ein Calciumhydrogenphosphatdihydratpigment, dessen mittlere Korngröße bei 4 μm und dessen maximale Korngröße bei 12 μm liegen. Seine BET-Oberfläche beträgt 2,7 m²/g.

## Beispiel 8

Man verfährt wie in Beispiel 6. Es werden jetzt aber anstelle des $CaCO_3$ 766 g (19 Mol) MgO in 14 l Wasser umgesetzt. Man erhält so ein weißes Pigment, das röntgenographisch als Magnesiumhydrogenphosphattrihydrat identifiziert wird (JCPDS-Kartei-Nr.: 20—153 und 1—597). Seine mittlere Korngröße liegt bei 1 μm, das Maximum bei 5 μm. Die BET-Oberfläche des Produkts beträgt 14 m²/g.

## Beispiel 9

Man verfährt wie in Beispiel 6. Es werden jetzt aber anstelle des $CaCO_3$ 2320 g (28,5 Mol) ZnO in 20 l Wasser umgesetzt. Das Resultat ist ein weißes Pigment, das röntgenographisch als Zinkphosphattetrahydrat (JCPDS-Kartei-Nr.: 9—497, 24—1461, 23—747) identifiziert werden kann. Seine mittlere Korngröße liegt unterhalb 1 μm, das Maximum bei 4 μm. Die BET-Oberfläche des Pigments beträgt 61 m²/g.

## Beispiel 10

Zu einer gut gerührten Lösung von 88,4 g (0,33 Mol) $Na_2HPO_4 \cdot 7 H_2O$ in 300 ml Wasser wird im Verlauf von 2 Stunden eine Mischung aus 84,5 g (0,5 Mol) $MnSO_4 \cdot H_2O$ in 200 ml Wasser und 1,35 g (0,05 Mol) Al in 25,4 g (0,22 Mol) 85gew.-%iger $H_3PO_4$ zugetropft. Der pH-Wert während der Reaktion bewegt sich zwischen 9 und 4. Es bildet sich ein schwach rosafarbener, pigmentfeiner Niederschlag, der abfiltriert, mit Wasser und Aceton gewaschen und 3 Stunden bei 70°C getrocknet wird. Röntgenographisch läßt sich das Pigment als $MnHPO_4 \cdot 3 H_2O$ (JCPDS-Kartei-Nr.: 1—316 und 3—361) identifizieren. Seine mittlere Korngröße liegt bei 4 µm, wobei maximal 10 µm erreicht werden.

## Beispiel 11
### (Vergleichsbeispiel)

Man verfährt wie in Beispiel 10. Zum Einsatz kommen jetzt aber nur 80,4 g (0,3 Mol) $Na_2HPO_4 \cdot 7 H_2O$ und 23,05 g (0,2 Mol) 85-gew.-%ige $H_3PO_4$ ohne Al-Zusatz. Man erhält $MnHPO_4 \cdot 3 H_2O$, dessen mittlere Korngröße 17—18 µm und dessen maximale Korngröße 60 µm betragen.

## Beispiel 12

In eine gut gerührte Lösung von 360,4 g (0,95 Mol) $Pb (CH_3COO)_2 \cdot 3 H_2O$ in 600 ml $H_2O$ werden 115,3 g (1 Mol) 85gew.-%ige $H_3PO_4$, in der 3,9 g (0,05 Mol) $Al(OH)_3$ vorher gelöst wurden, dosiert. Die Temperatur während der Reaktion beträgt 25°C, die Reaktionszeit 2 Stunden. Der pH-Wert liegt im Bereich von 7 bis 4. Es bildet sich ein weißer Niederschlag von Bleihydrogenphosphat, der abgenutscht, mit Wasser und Aceton gewaschen und im Trockenschrank bei 70°C 3 Stunden getrocknet wird. Die Identifizierung erfolgte röntgenographisch (X-Ray Diffraction Patterns of Lead Compounds, Chester, England, 1954, S. 54/55). Die Korngröße des Pigments beträgt im Mittel 2µm und maximal 5 µm.

## Beispiel 13
### (Vergleichsbeispiel)

Man verfährt wie in Beispiel 12. Es werden jetzt aber zu einer Lösung von 379,3 g (1 Mol) Pb $(CH_3COO)_2 \cdot 3 H_2O$ in 600 ml $H_2O$ im Verlauf von 2 Stunden 115,3 g (1 Mol) $H_3PO_4$, 85 gew.-%ig, ohne Al-Zusatz dosiert. Es resultiert ein Bleihydrogenphosphat, dessen mittlere Korngröße bei 10—11 µm und dessen maximale Korngröße bei 30 µm liegen.

## Beispiel 14

Zu einer gut gerührten Suspension von 77,3 g (0,95 Mol) ZnO in 400 ml Wasser wird im Verlauf von 2 Stunden eine Lösung von 1,35 g (0,05 Mol) Al in 126,2 g (1 Mol) 65gew.-%iger $H_3PO_3$ zudosiert. Der pH-Wert bewegt sich während der Reaktion zwischen 8 und 4. Es bildet sich ein weißer Niederschlag, der über eine Nutsche von der Lösung filtriert, mit Wasser und Aceton gewaschen und im Trockenschrank bei 70°C 3 Stunden getrocknet wird. Das Resultat ist ein Zinkphosphitpigment, dessen mittlere Korngröße bei 4 µm und dessen maximale Korngröße bei 10 µm liegen.

## Beispiel 15
### (Vergleichsbeispiel)

Man verfährt wie in Beispiel 14. Zum Einsatz kommen jetzt aber 81,3 g (1 Mol) ZnO und 126,2 g (1 Mol) 65gew.-%ige $H_3PO_3$ ohne Al-Zusatz. Es resultiert ein Zinkphosphit, dessen mittlere Korngröße bei 15 µm und dessen maximale Korngröße bei 28 µm liegen.

## Beispiel 16

178,0 g (1 Mol) $H_4P_2O_7$ werden unter Eiskühlung mit 50 g schmelzendem Eis verrührt, bis sich eine homogene Lösung gebildet hat. Dann werden unter gutem Rühren 12,7 g (0,04 Mol) $Al(H_2PO_4)_3$ als 50gew.-%ige wäßrige Lösung zugegeben. Die eiskalte Lösung wird danach im Verlauf von 2 Stunden zu einer gut gerührten Suspension von 79,0 g (1,96 Mol) MgO in 300 ml Wasser gegeben. Der pH-Wert während der Reaktion bewegt sich im Bereich von 9 bis 5. Es bildet sich ein Magnesiumpyrophosphatoktahydrat mit einer mittleren Korngröße von 1 µm und einer maximalen Korngröße von 5 µm.

## Beispiel 17
### (Vergleichsbeispiel)

Man verfährt wie in Beispiel 16. Die Pyrophosphorsäure, die jedoch kein Al enthält, wird zu einer Suspension von 80,6 g (2 Mol) MgO in 300 ml Wasser getropft. Es entsteht ein Magnesiumpyrophosphatoktahydrat, dessen mittlere Korngröße bei 5 µm und dessen maximale Korngröße bei 15 µm liegen.

## Patentansprüche

1. Verfahren zur Herstellung eines feindispersen, schwerlöslichen Salzes einer Sauerstoffsäure des Phosphors mit einer Korngröße von höchstens 20 µm durch Umsetzung einer Verbindung eines zweiwertigen Metalls mit der Sauerstoffsäure des Phosphors oder einem ihrer Alkali- oder Ammoniumsalze, dadurch gekennzeichnet, daß man zur Erzielung einer Korngrößenverteilung des feindispersen Salzes von mindestens 90% zwischen 0,05 und 7 µm eine mindestens 5gew.-%ige wäßrige Lösung oder Suspension einer Verbindung eines zweiwertigen Metalls aus der Gruppe Mg, Ca, Sr, Ba, Mn, Zn, Cu, Cd, Pb, Sn, Co, Ni unter Einhaltung eines pH-Bereichs zwischen 3 und 9 mit einer mindestens 2mol-%igen Lösung mindestens eines dreiwertigen Metalls aus der Gruppe Al, Fe, Cr in der Sauerstoffsäure des Phosphors und ggf. mit einer wäßrigen Lösung eines Alkali- oder Ammoniumsalzes der Sauerstoffsäure des Phosphors unter Rühren zur Reaktion bringt und das ausgefallene Salz in bekannter Weise abtrennt und trocknet.

2. Verfahren nach Anspruch 1, dadurch gekennzeichnet, daß man als Verbindung des zweiwertigen Metalls ein Carbonat, Oxid, Acetat oder Hydroxid einsetzt.

3. Verfahren nach Anspruch 2, dadurch gekennzeichnet, daß man die wäßrige Lösung oder Suspension der Verbindung des zweiwertigen Metalls vorlegt und die Lösung des dreiwertigen Metalls in der Sauerstoffsäure des Phosphors unter Rühren zudosiert.

4. Verfahren nach Anspruch 1, dadurch gekennzeichnet, daß man im Falle der Verwendung einer Verbindung eines zweiwertigen Metalls mit einem sauer reagierenden Anion den pH-Bereich zwischen 3 und 9 einhält, indem man gleichzeitig eine alkalische Verbindung zufügt, die mit dem sauer reagierenden Anion ein wasserlösliches Salz bildet.

5. Verfahren nach Anspruch 4, dadurch gekennzeichnet, daß man als alkalische Verbindung eine wäßrige Lösung eines Alkali- oder Ammoniumsalzes der Sauerstoffsäure des Phosphors vorlegt und eine Mischung einer wäßrigen Lösung der Verbindung des zweiwertigen Metalls und der Lösung des dreiwertigen Metalls in der freien Sauerstoffsäure des Phosphors zudosiert, wobei die einzusetzende, stöchiometrisch erforderliche Menge an freier Sauerstoffsäure des Phosphors um einen Betrag vermindert wird, welcher der Menge ihres vorgelegten Alkali- oder Ammoniumsalzes äquivalent ist.

6. Verfahren nach einem der Ansprüche 1—5, dadurch gekennzeichnet, daß man eine 8—30- gew.-%ige, wäßrige Lösung oder Suspension einer Verbindung des zweiwertigen Metalls einsetzt.

7. Verfahren nach einem der Ansprüche 1—6, dadurch gekennzeichnet, daß man die Verbindungen des zweiwertigen und des dreiwertigen Metalls im Reaktionsgemisch im Molverhältnis von (9 : 1) bis (50 : 1) einsetzt.

8. Verfahren nach einem der Ansprüche 1—7, dadurch gekennzeichnet, daß man zur Erzielung einer Korngrößenverteilung des feindispersen Salzes von mindestens 90% zwischen 0,05 und 2 µm die Reaktionskomponenten in einem mit 3000 bis 10 000 UpM rotierenden Dispergierorgan durch inniges Vermischen zur Reaktion bringt.

## Claims

1. Process for the manufacture of a finely dispersed, sparingly soluble salt of an oxyacid of phosphorus, having a particle size of at most 20 µm, by reacting a compound of a divalent metal with the oxyacid of phosphorus or one of its alkali metal or ammonium salts, wherein, in order to produce a finely dispersed salt consisting to an extent of at least 90% of particles with a size between 0.05 and 7 µm, an at least 5% by weight aqueous solution or suspension of a compound of a divalent metal selected from the group consisting of Mg, Ca, Sr, Ba, Mn, Zn, Cu, Cd, Pb, Sn, Co, Ni is reacted while maintaining a pH range of between 3 and 9 and while stirring, with an at least 2 mol% solution of at least one trivalent metal selected from the group consisting of Al, Fe, Cr in the oxyacid of phosphorus and, optionally, with an aqueous solution of an alkali metal or ammonium salt of the oxyacid of phosphorus, and the precipitated salt is separated and dried in known manner.

2. Process as claimed in claim 1, wherein a carbonate, oxide, acetate or hydroxide is used as a compound of the divalent metal.

3. Process as claimed in claim 2, wherein the aqueous solution or suspension of the compound of the divalent metal is admixed, with agitation, with metered proportions of the solution of the trivalent metal in the oxyacid of phosphorus.

4. Process as claimed in claim 1, wherein in the event of a compound of a divalent metal having an acid-reacting anion being used, the pH-range is maintained between 3 and 9 by simultaneously adding an alkaline compound which forms a water-soluble salt with the acid-reacting anion.

5. Process as claimed in claim 4, wherein an aqueous solution of an alkali metal or ammonium salt of the oxyacid of phosphorus is used as the alkaline compound, the latter being admixed with metered proportions of a mixture of an aqueous solution of the compound of the divalent metal and the solution of the trivalent metal in the free oxyacid of phosphorus, the stoichiometrically required amount of free oxyacid of phosphorus to be used being reduced by an amount equivalent to that of the alkali metal or ammonium salt first used.

6. Process as claimed in any of claims 1 to 5, wherein an 8—30% by weight aqueous solution or suspension of a compound of the divalent metal is used.

7. Process as claimed in any of claims 1 to 6, wherein the compound of the divalent metal and that of the trivalent metal are used in the reaction mixture in a molar ratio of from (9 : 1) to (50 : 1).

8. Process as claimed in any of claims 1 to 7, wherein, in order to produce finely dispersed salt consisting to an extent of at least 90% of particles with a size between 0.05 and 2 µm, the reaction components are reacted by intimately mixing them in a dispersing means rotating at a speed of from 3000 to 10 000 rpm.

## Revendications

1. Procédé pour la fabrication d'un sel peu soluble, finement dispersé, d'un acide oxygéné du phosphore, ayant une dimension de parti-

cules de 20 µm au plus, par réaction d'un composé d'un métal divalent avec l'acide oxygéné du phosphore ou un de ses sels alcalins ou d'ammonium, caractérisé en ce que, pour l'obtention d'une distribution granulométrique du sel finement dispersé d'au moins 90% entre 0,05 et 7 µm, on fait réagir en agitant une solution ou suspension aqueuse à au moins 5% en poids d'un composé d'un métal divalent du groupe de Mg, Ca, Sr, Ba, Mn, Zn, Cu, Cd, Pb, Sn, Co et Ni avec une solution à au moins 2 moles % d'au moins un métal trivalent du groupe de Al, Fe, Cr dans l'acide oxygéné du phosphore, et éventuellement avec une solution aqueuse d'un sel alcalin ou d'ammonium de l'acide oxygéné du phosphore, en maintenant un intervalle de pH entre 3 et 9, et on sépare et on sèche de manière connue le sel précipité.

2. Procédé selon la revendication 1, caractérisé en ce que l'on utilise comme composé d'un métal divalent un carbonate, un oxyde, un acétate ou un hydroxyde.

3. Procédé selon la revendication 2, caractérisé en ce que l'on part d'une solution ou suspension aqueuse du composé du métal divalent et on y dose en agitant la solution de métal trivalent dans l'acide oxygéné du phosphore.

4. Procédé selon la revendication 1, caractérisé en ce que, dans le cas de l'utilisation d'un composé d'un métal divalent avec un anion à réaction acide, on ajuste le domaine de pH entre 3 et 9, en ajoutant simultanément un composé alcalin qui forme un sel soluble dans l'eau avec l'anion à réaction acide.

5. Procédé selon la revendication 4, caractérisé en ce qu'on prend comme composé alcalin une solution aqueuse d'un sel alcalin ou d'ammonium de l'acide oxygéné du phosphore et on y dose un mélange d'une solution aqueuse du composé du métal divalent et de la solution du métal trivalent dans l'acide oxygéné libre du phosphore, la quantité stoechiométrique nécessaire d'acide oxygéné libre du phosphore à ajouter étant réduite d'une quantité qui est équivalente à la quantité du sel alcalin ou d'ammonium chargé au préalable.

6. Procédé selon l'une quelconque des revendications 1 à 5, caractérisé en ce que l'on utilise une solution ou une suspension aqueuse à 8—30% en poids d'un composé du métal divalent.

7. Procédé selon l'une quelconque des revendications 1 à 6, caractérisé en ce que l'on utilise le composé du métal divalent et le composé du métal trivalent dans le mélange de réaction dans un rapport molaire de (9 : 1) à (50 : 1).

8. Procédé selon l'une quelconque des revendications 1 à 7, caractérisé en ce que, pour obtenir une distribution granulométrique du sel finement dispersé d'au moins 90% entre 0,05 et 2 µm, on fait réagir les composants de la réaction par mélange intime dans un organe de dispersion tournant entre 3000 et 10 000 tr/min.